# DEMANDE DE BREVET EUROPEEN

(11) **EP 3 147 843 A1**
(43) Date de publication de la demande: **29.03.2017**
(21) Numéro de dépôt: 16182860.3
(22) Date de dépôt: 04.08.2016
(51) Int. Cl.: G06Q 20/02, G06Q 20/32, H04M 15/00

(54) **GESTION PERFECTIONNÉE D'UNE COMMUNICATION DE DONNÉES D'UNE TRANSACTION ENTRE UNE BORNE DE SERVICE ET UN TERMINAL DE TÉLÉPHONIE**

(30) Priorité: 25.09.2015 FR 1559063
(71) Demandeur: Cartadis, 92140 Fontenay Sous Bois (FR)
(72) Inventeur: CHAILLAT, Jean-Luc, 93110 ROSNY SOUS BOIS (FR)
(74) Mandataire: Cabinet Plasseraud

(57) **Abrégé**

L'invention concerne la gestion d'une transaction entre :
- un équipement (EQ), de contrôle de fourniture d'un service, et
- un terminal (TER) de télécommunication mobile via un réseau étendu, à disposition d'un utilisateur sollicitant le service.

L'équipement de contrôle stocke en mémoire des données d'au moins une transaction passée avec un terminal, en vue d'une transmission à un serveur distant (SER), de pointage de transactions opérées au moins par ledit équipement. En particulier, l'équipement étant dépourvu de moyens de télécommunication via un réseau étendu, la communication entre l'équipement et un terminal s'établit via une liaison de type radiofréquence de courte portée (F'1). L'équipement transmet alors les données de transaction précitées à au moins un terminal passant à proximité de l'équipement et dans la portée de ladite liaison radiofréquence, en vue d'une communication ultérieure par ce terminal passant, des données de transaction au serveur distant et via le réseau étendu (RES).

## Description

La présente invention concerne une transaction avec une borne de paiement pour un service (de type borne de parking, distributeur automatique, ou autre).

Elle concerne plus particulièrement une transaction dite « sans argent liquide » pour obtenir ce service, entre un équipement de contrôle que la borne comporte et un terminal de téléphonie de type smartphone.

Au cours de ce type de transaction, un exemple de réalisation possible consiste à prévoir un jeton de consommation dont des données sont initialement stockées dans une mémoire du terminal comme étant « à consommer » (l'utilisateur du terminal ayant préalablement acquis un droit de consommer ce jeton).

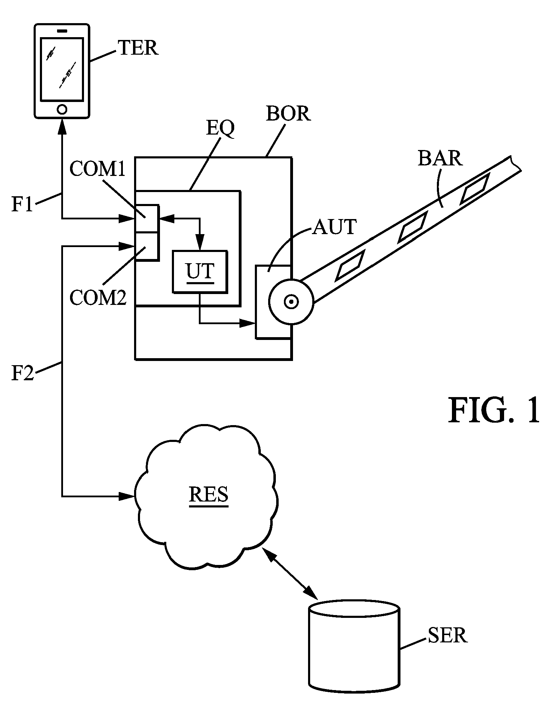

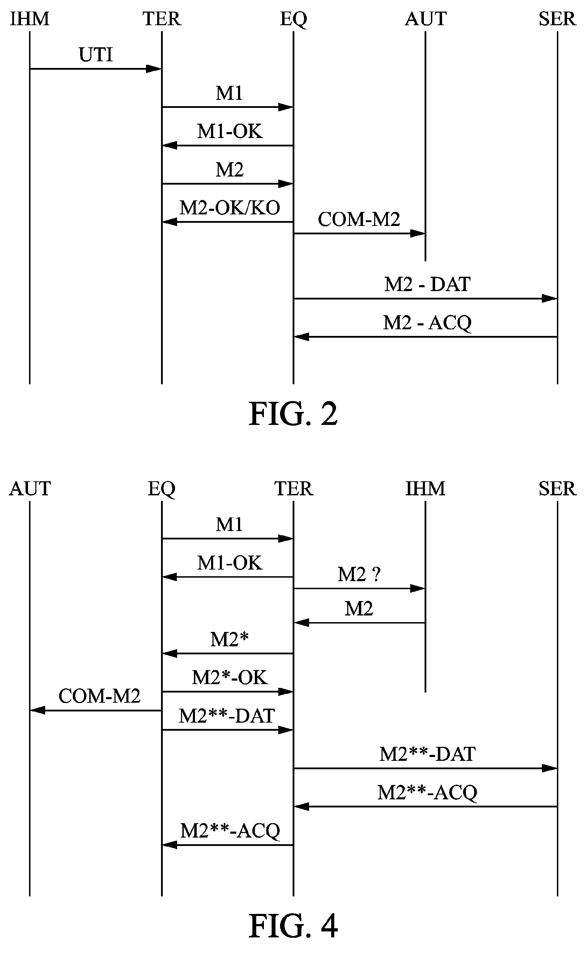

En référence à la figure 1 relative à l'art antérieur, une borne de paiement BOR comprend un équipement EQ, capable de communiquer avec un terminal TER de type smartphone et de piloter un automate AUT pour fournir un service (comme soulever une barrière de parking BAR dans l'exemple représenté). Plus particulièrement, en référence à la figure 2, lorsqu'un utilisateur du terminal lance sur son terminal TER, via une interface homme machine IHM (flèche UTI), une application adéquate pour établir une transaction avec l'équipement EQ, le terminal TER, dans un exemple de réalisation, ouvre une session de communication par exemple via une liaison radiofréquence (flèche F1 de la figure 1) avec l'équipement EQ. En pratique, dans le cas de plusieurs bornes à proximité, le terminal peut initier une transaction avec la borne la plus proche du terminal d'après l'intensité du signal Bluetooth.

La session de communication peut s'ouvrir avec un premier message M1 (figure 2) qu'émet le terminal, de demande d'amorce de transaction avec l'équipement EQ, lequel y répond favorablement (message M1-OK) par exemple si la borne est prête pour la transaction. Ensuite, le terminal TER transmet une demande de service à l'équipement EQ (message M2), lequel répond favorablement ou non par exemple en fonction de la disponibilité du service (message M2-OK/KO), de l'authentification du terminal, de l'autorisation de son utilisateur à disposer du service, ou encore de tout autre critère. Dans le cas où l'équipement EQ accepte et valide la transaction, il transmet une commande COM-M2 à l'automate AUT pour fournir le service sollicité (ouvrir la barrière BAR par exemple). Par ailleurs, sur réception d'un accord de transaction M2-OK, le terminal TER peut éventuellement décrémenter dans sa mémoire le nombre de jetons de crédit pour ce service.

En référence à la figure 1, l'équipement EQ comporte plus particulièrement un circuit de traitement UT pour dialoguer avec le terminal TER et commander l'automate AUT. Ce circuit UT est relié à des moyens de communication avec le terminal TER, typiquement via une liaison sans fil radiofréquence.

Cette liaison peut être via le réseau cellulaire GSM et l'équipement EQ peut alors être équipé à cet effet d'une puce 3G ou 4G. Or, par exemple dans des sous-sols, ces puces ne captent pas correctement le réseau GSM. Ainsi, la communication entre la borne et le terminal peut être compromise.

On peut envisager alors que l'équipement puisse comporter un module de communication COM1 de courte portée, et ainsi l'équipement est configuré pour communiquer avec le terminal par une liaison radiofréquence de courte portée (flèche F1) telle que le Bluetooth (ou alternativement par une lecture en champ proche, ou par wifi, ou autre). Ce type de communication offre l'avantage de ne pas dépendre des conditions de réception du réseau cellulaire, tout en maintenant une connexion sans fil entre le terminal et la borne. Par ailleurs, une majorité significative des smartphones actuels est équipée de tels modules de communication courte portée.

Toutefois, la borne doit transmettre ensuite les données M2-DAT de la transaction à un serveur SER (figure 1), pour le pointage des transactions effectuées par cette borne ou par un parc de bornes offrant des services auxquels sont abonnés des terminaux clients. Ce serveur SER est sur un site distant et l'équipement EQ doit disposer à cet effet de moyens de communication COM2 spécifiques avec le serveur SER (flèche F2 de la figure 1). La communication avec le serveur est préférentiellement bidirectionnelle car, en référence à nouveau à la figure 2, l'équipement EQ doit attendre en outre un acquittement du serveur SER (qu'il reçoit via le réseau RES) pour définitivement effacer de sa mémoire les données de transaction M2-DAT.

Habituellement, les bornes sont équipées de puces 3G ou 4G aptes à communiquer avec le serveur SER via un réseau étendu RES cellulaire. Comme un problème d'accès au réseau cellulaire se pose dans certaines configurations (parkings, lieux de nature non couverts par le réseau), la communication entre la borne et le serveur peut être compromise. On pourrait envisager de remplacer la puce 3G ou 4G par un modem relié au serveur via une liaison filaire (et le réseau Internet), pour constituer le module COM2 de l'équipement. Or, un tel moyen est coûteux tant en termes de matériel qu'en termes d'installation.

Par ailleurs, il est souhaité de prévoir une borne déplaçable pour suivre par exemple les aménagements d'entrées/sorties dans un bâtiment.

La présente invention vient améliorer la situation.

Elle propose à cet effet un procédé mis en oeuvre par des moyens informatiques, de gestion d'une transaction entre :
- un équipement, de contrôle de fourniture d'un service, et
- un terminal de télécommunication mobile via un réseau étendu, à disposition d'un utilisateur sollicitant le service (mais n'ayant pas nécessairement accès au réseau étendu pendant la transaction).
Dans le procédé, l'équipement de contrôle :
a) stocke en mémoire des données d'au moins une transaction passée avec un terminal, en vue d'une transmission à un serveur distant, de pointage de transactions opérées cet équipement au moins.

En particulier, l'équipement étant dépourvu de moyens de télécommunication via un réseau étendu, la communication entre l'équipement et un terminal s'établit via une liaison de type radiofréquence de courte portée.

En outre, l'équipement :
b) transmet les données de transaction précitées à au moins un terminal passant à proximité de l'équipement et dans la portée de ladite liaison radiofréquence, en vue d'une communication ultérieure par ledit terminal passant, des données de transaction au serveur distant et via le réseau étendu.

Ainsi, le procédé que vise l'invention prévoit d'attribuer aux terminaux passants près de l'équipement la charge de transmettre les données de transaction(s) de l'équipement au serveur distant une fois que ces terminaux ont accès au réseau cellulaire, alors qu'au sens de l'art antérieur l'équipement EQ devait effectuer cette transmission.

Le terminal qui transmet les données d'une transaction au serveur peut être le terminal avec lequel l'équipement vient de conclure une transaction, ou plus généralement un terminal quelconque. Dans un tel terminal toutefois, une application d'accès au service qu'offre l'équipement a été installée et une routine de cette application s'exécute pour stocker en mémoire les données de transaction(s) reçue(s) de l'équipement et pour les transmettre à un serveur distant identifié une fois que le terminal a accès au réseau étendu. Cette routine s'exécute « discrètement », dans la mesure où l'utilisateur n'est pas prévenu, ni dérangé, par un signal d'interface homme-machine quelconque l'informant de cette transmission de données au serveur.

Ainsi dans cette réalisation, l'équipement exécute l'étape b) au moins à chaque passage d'un terminal à proximité de l'équipement. Dans un exemple de réalisation possible, l'équipement peut transmettre un envoi permanent des données de transactions (en broadcast) et les terminaux qui ne sont pas équipés de la routine de transmission à un serveur indiqué, ignorent simplement les données. Par ailleurs, ces données de transactions sont préférentiellement chiffrées avec une clé connue seulement des équipements offrant le service et du serveur distant, comme on le verra plus loin. Ainsi, les utilisateurs des terminaux ne peuvent pas accéder à ces données.

Dans une forme de réalisation, l'équipement :
- à l'étape a), stocke en mémoire, après une transaction courante, un jeu de données comprenant non seulement des données de la transaction courante, mais aussi des données d'au moins une transaction passée, antérieure à la transaction courante, et
- à l'étape b), transmet ce jeu de données à chaque passage d'un terminal à proximité de l'équipement.

Ainsi, cette réalisation permet de multiplier par autant de terminaux passants les chances au serveur d'accéder finalement à ces données de transaction.

Néanmoins, le serveur, de son côté, peut donc recevoir plusieurs jeux de données de transactions dont une partie au moins est redondante d'un jeu à l'autre.

Dans une réalisation, on prévoit alors que le serveur distant, sur réception d'une pluralité de jeux de données de transaction, issus respectivement de terminaux passant successivement à proximité de l'équipement, retrouve les données de transaction avec chaque terminal, et élimine les données de transaction reçues en redondance.

Dans une réalisation, on peut prévoir que l'équipement compte un nombre de transmissions de données à l'étape b) à des terminaux passants successifs, et efface de sa mémoire les données stockées à l'étape a) si ce nombre de transmissions dépasse un seuil prédéterminé (par exemple dix transmissions).

On peut prévoir toutefois une alternative à cette réalisation.

En effet, dans une réalisation générale, à l'issue de l'étape b), le serveur distant peut :
- sur réception des données d'une transaction, acquitter les données de transaction reçues, et
- en retour, transférer des données d'acquittement de cette transaction au terminal passant précité, le terminal passant stockant les données d'acquittement en vue d'une communication ultérieure de ces données d'acquittement par le terminal passant à l'équipement via la liaison radiofréquence de courte portée.

Ainsi, en variante d'un critère d'effacement des données de transactions auprès de l'équipement, et basé sur un nombre de transmission à des terminaux passants, on peut prévoir une réalisation dans laquelle l'équipement, sur réception des données d'acquittement de transaction précitées par un terminal passant, efface de sa mémoire les données de transactions correspondantes, qui avaient été stockées à l'étape a).

L'étape a) précitée est généralement précédée de la transaction en tant que telle. Elle comporte habituellement un échange de messages entre l'équipement et un terminal au cours duquel l'équipement vérifie typiquement une habilitation d'un utilisateur de ce terminal à obtenir le service que peut offrir la borne. Pour éviter les fraudes (de consommation de jetons par exemple) au cours de la transaction, cet échange de messages préalable à l'étape a) est chiffré avec une première clé de chiffrement.

Dans une forme de réalisation, il est considéré que le terminal mobile est un équipement non sûr et qu'il peut être source d'attaque informatique visant à délivrer des services contre des jetons falsifiés. Pour cette raison aucune clé de chiffrement n'y est stockée. Le terminal mobile ne chiffre ni déchiffre aucun message : il se contente de retransmettre vers l'équipement EQ les données, signées par une première clé de chiffrement, en provenance du serveur SER, ou réciproquement de retransmettre vers le serveur SER ou d'autres bornes les messages, signés par une deuxième clé de chiffrement, en provenance d'un équipement EQ.

Dans une réalisation alors, l'équipement chiffre les données de transaction envoyées au terminal passant à l'étape b) avec une deuxième clé de chiffrement, la deuxième clé étant distincte de la première clé. Cette réalisation avec deux clés distinctes empêche alors une fraude visant à falsifier des données transmises au serveur, qui pourrait être réalisée par connaissance de la première clé.

Dans une réalisation alternative à celle d'une pluralité de transmissions de données à une pluralité de terminaux passants, on peut prévoir que seuls les terminaux ayant opéré une transaction avec l'équipement reçoivent de cet équipement les données à transmettre au serveur. On peut alors, dans une réalisation, convenir que le service n'est fourni que lorsque le terminal a bien reçu les données de transaction de l'équipement. Ainsi, dans une telle réalisation, à l'issue d'une transaction avec un terminal courant, l'équipement de contrôle :
a) stocke en mémoire les données de transaction avec le terminal courant,
b) transmet les données de transaction au terminal courant en vue d'une communication ultérieure par ledit terminal courant des données de transaction au serveur distant et via le réseau étendu, et
c) commande à un automate de fournir le service sollicité.

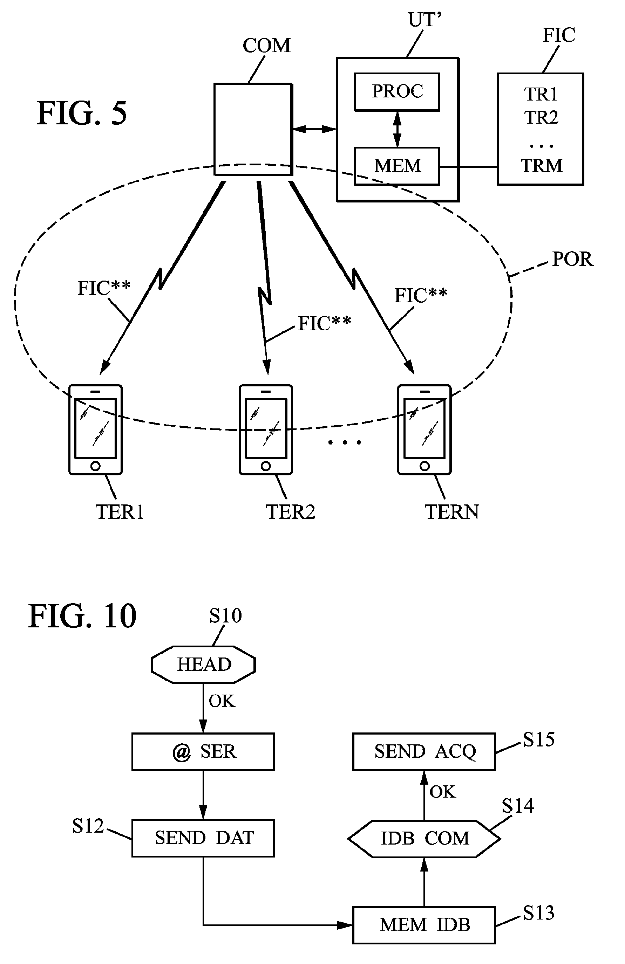

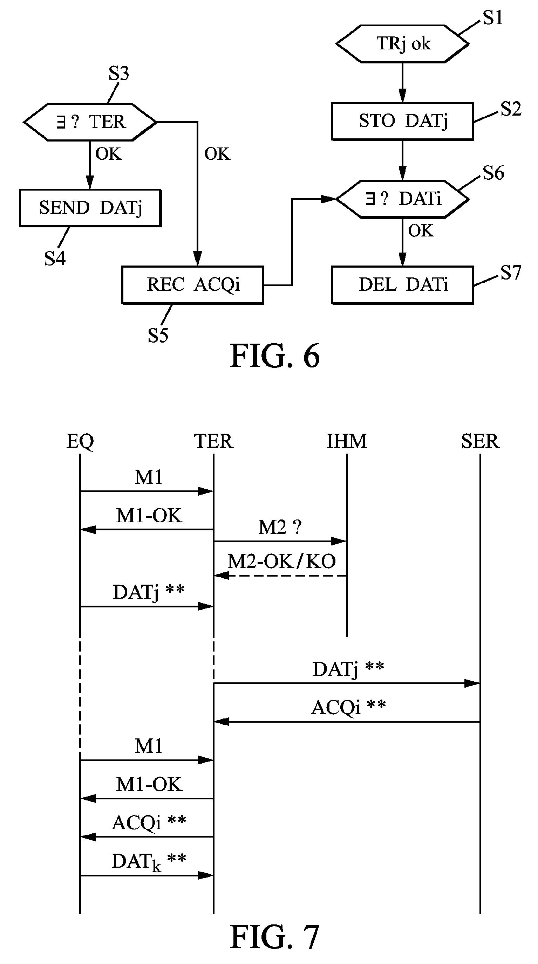

La présente invention vise aussi un programme informatique (ainsi qu'un support mémoire stockant un tel programme) comportant des instructions pour la mise en oeuvre du procédé ci-avant, lorsque ce programme est exécuté par un processeur. L'exécution des instructions d'un tel programme peut être répartie entre les différentes entités : équipement, terminal, serveur, et les parties de programme correspondantes sont aussi visées ici. Par exemple, la figure 6 commentée ci-après peut correspondre à un ordinogramme général d'un programme exécuté par l'équipement et la figure 10 peut correspondre à un ordinogramme général d'un programme exécuté par le terminal.

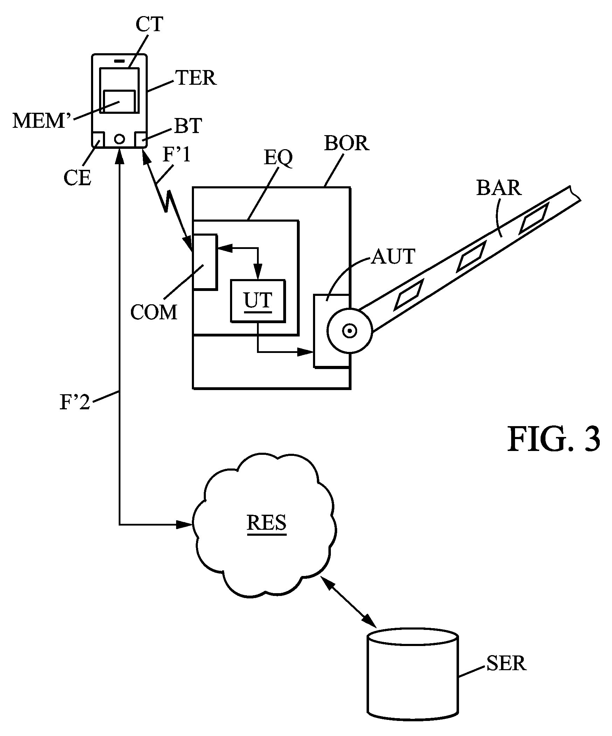

La présente invention vise aussi un équipement de contrôle de fourniture d'un service, comportant au moins une interface de communication radiofréquence de courte portée (référence COM de la figure 3 décrite ci-après), reliée à un circuit de traitement (référence UT') programmé pour la mise en oeuvre du procédé exposé ci-avant.

La présente invention vise aussi un serveur de pointage de transactions opérées par un équipement au sens de l'invention, et comportant un module informatique exécutant au moins une routine de recoupement de données pour la mise en oeuvre du procédé exposé plus haut.

La présente invention vise aussi un terminal de télécommunication mobile via un réseau étendu (typiquement le réseau cellulaire), comportant en outre une interface de communication radiofréquence de courte portée (référence BT de la figure 3), reliée à un circuit de traitement (CT) programmé pour transmettre, via le réseau étendu (RES) et à un serveur distant prédéterminé (SER), des données de transaction reçues via une liaison radiofréquence de courte portée (flèche F'1) d'un équipement de contrôle de fourniture d'un service à l'issue de l'étape b) du procédé défini ci-avant.

Pour assurer la double communication courte portée F'1 et réseau étendu F'2, le terminal TER de la figure 3 comporte respectivement un module de communication courte portée BT (type Bluetooth, typiquement), ainsi qu'un module de communication cellulaire CE (incluant notamment une antenne). Par ailleurs, le circuit de traitement CT, assurant la transition de ces données d'un module à l'autre, comporte préférentiellement une mémoire de travail MEM' pour stocker temporairement les données reçues de l'équipement EQ en attendant un accès au réseau étendu RES. Le terminal TER comporte aussi classiquement un processeur pour gérer les interactions entre ces différents modules et mémoire.

Bien entendu, l'invention vise aussi un système comportant alors l'équipement, le terminal et le serveur précité (ainsi éventuellement que d'autres entités telles que l'automate fournissant le service sur commande de l'équipement).

D'autres avantages et caractéristiques de l'invention apparaîtront à la lecture de la description d'exemples de réalisation détaillés ci-après, et à l'examen des dessins sur lesquels, outre les figures 1 et 2 commentées plus haut et relatives à l'art antérieur :
- la figure 3 illustre un système matériel pour la mise en oeuvre de l'invention,
- la figure 4 illustre un exemple d'échange de messages notamment entre l'équipement EQ d'une borne et un terminal TER,
- la figure 5 illustre un exemple de communication d'un équipement au sens de l'invention avec une pluralité de terminaux dans sa portée POR,
- la figure 6 illustre un exemple de procédé de gestion de données qu'opère l'équipement après une transaction,
- la figure 7 illustre un exemple d'échange de messages notamment entre l'équipement EQ et le serveur SER, selon le procédé de la figure 6,
- la figure 8 illustre schématiquement la vérification des données reçues qu'opère le serveur et l'élimination des données redondantes,
- la figure 9 illustre schématiquement le traitement des données d'acquittement reçues par l'équipement pour la suppression progressive des données de transaction stockées en mémoire de l'équipement,
- la figure 10 illustre un exemple de procédé de gestion de données qu'opère le terminal recevant des données de transaction d'un équipement.

Sur les dessins, les mêmes références désignent des objets similaires ou des objets de fonctionnalités équivalentes.

En référence à la figure 3, l'équipement EQ au sens de l'invention ne possède qu'une interface de communication COM de courte portée (sans besoin de capter le réseau GSM), de type liaison Bluetooth, wifi, ou en champ proche (NFC), pour la communication avec les terminaux TER qui sont dans sa portée (flèche F'1).

Au sens de l'invention, un terminal TER communiquant avec l'équipement prend en charge la communication habituelle entre l'équipement EQ et le serveur SER. Ainsi, une transaction est normalement opérée entre un terminal TER et l'équipement EQ via la liaison de courte portée F'1 (via le module COM de la figure 3), tandis que l'équipement transmet en outre des données de transaction à un terminal TER dans sa portée via le module COM, pour que ce terminal transmette ensuite ces données de transaction au serveur distant SER via le réseau étendu RES (flèche F'2 de la figure 3).

Ainsi, l'invention vient tirer avantage du fait que les smartphones peuvent généralement communiquer à la fois via le réseau étendu GSM et via des liaisons radiofréquences de courte portée. Par conséquent, un terminal TER peut :
- recevoir des données de transaction de l'équipement EQ via la liaison de courte portée F'1 (à l'issue d'une transaction ou non comme décrit plus loin en référence à la figure 5),
- puis stocker en mémoire ces données, par exemple temporairement, et
- une fois que le smartphone a de nouveau une connexion au réseau cellulaire (une fois par exemple que son utilisateur sort d'une zone de mauvaise réception telle qu'un parking), transmettre ces données au serveur distant SER (flèche F'2).

En référence maintenant à la figure 4, dans un exemple de réalisation alternatif à celui présenté sur la figure 2, l'équipement EQ prend l'initiative de l'envoi d'un premier message M1 de type « *bonjour* » à un terminal passant dans la portée de liaison courte portée F'1, pour initier une transaction éventuelle avec ce terminal, ou pour lui transmettre ses données de transaction comme décrit plus loin en référence à la figure 5 (avantageusement sans modifier le début de l'organigramme de l'application qu'exécute l'équipement dans les deux cas). Si une application de dialogue avec un parc de bornes pour un service que peuvent rendre ces bornes est a été effectivement installée dans le terminal TER, ce dernier peut déterminer si l'équipement EQ envoyant le message M1 a par exemple un identifiant correspondant à l'une de ces bornes. Si tel est le cas, le terminal TER peut répondre au message M1 par un message M1-OK, signifiant que le terminal TER peut effectivement dialoguer avec l'équipement EQ pour solliciter un service ou simplement pour transmettre des données de l'équipement au serveur SER.

Par exemple, la réception du message M1 par le terminal TER peut provoquer en outre l'affichage d'un message M2? sur l'interface homme-machine du terminal demandant à son utilisateur s'il souhaite solliciter le service que peut offrir la borne. Si une réponse positive M2 est donnée par l'utilisateur, la transaction s'amorce par une demande de service M2*. Plus particulièrement, la transaction s'amorce, dans un exemple de réalisation, avec l'échange d'un message M2* entre le terminal TER et l'équipement EQ, ce message étant signé par une première clé de chiffrement.

Ce message est initialement reçu du serveur SER auprès du terminal TER, et comporte ainsi le « jeton » à consommer. Néanmoins, cette interaction préalable entre le terminal TER et le serveur SER ne fait pas intervenir l'équipement EQ, et n'est pas décrite en détails ici car elle ne concerne pas la transaction particulièrement entre l'équipement EQ et le terminal TER.

Si le service requis peut être fourni, l'équipement EQ envoie en effet un message M2*-OK signé avec la deuxième clé de chiffrement, ce message contient une mise à jour du jeton et se substitue à l'ancienne valeur du jeton dans la mémoire du terminal TER. Ce message ne doit pas être modifié par un fraudeur : le message M2*-OK est donc signé à cet effet par la deuxième clé connu uniquement par les équipements EQ et le serveur SER. Par ailleurs, l'équipement EQ commande l'automate AUT pour délivrer le service (commande COM-M2).

Ensuite, l'équipement EQ peut profiter de la proximité du terminal TER pour lui transmettre les données de transaction qu'il a en mémoire. Il peut s'agir des données de la dernière transaction M2. Néanmoins, comme on le verra plus loin, un mode de réalisation avantageux consiste à transmettre les données de transaction à plusieurs terminaux à la fois pour multiplier les chances de transmission de ces données au serveur SER, et ce à l'aide de différents terminaux (l'un au minimum étant en effet susceptible de revoir le réseau GSM pour effectuer cette transmission). Ainsi, l'équipement EQ stocke dans une mémoire MEM (figure 5) des données d'une transaction courante, mais aussi de transaction passées. Ainsi, les données M2**-DAT peuvent inclure non seulement les données de la transaction courante M2 avec le terminal TER, mais aussi des données de transactions précédentes. L'envoi de cet ensemble des données de transactions courante et passées M2**-DAT est donc crypté avec une deuxième clé de chiffrement, distincte de la première, pour ne pas que des données de transaction avec d'autres terminaux puissent être accessibles sur le terminal TER. En réalité, cette deuxième clé est propre aux messages issus des bornes et à destination du serveur SER ou d'autres bornes, tandis que la première clé est propre aux messages issus du serveur SER.

Il convient de noter que la fourniture du service COM-M2 peut n'être effectuée que lorsque la réception des données M2**-DAT auprès du terminal TER a été effective (ce qui revient à déplacer la flèche COM-M2 vers le bas après la flèche M2**-DAT).

Ensuite, le terminal TER, une fois qu'il est couvert par le réseau RES, transmet sans modification, ni lecture, ces données M2**-DAT au serveur. S'il est encore couvert par le réseau, il reçoit du serveur SER, en retour, des données d'acquittement correspondantes M2**-ACQ. Au prochain passage du terminal TER à proximité de la borne (i.e. dans la portée de la liaison radiofréquence F'1), le terminal TER transmet à l'équipement EQ les données d'acquittement M2**-ACQ, telles quelles, sans modification.

On se réfère maintenant à la figure 5 sur laquelle l'unité de traitement UT' d'un équipement au sens de l'invention stocke dans sa mémoire MEM un fichier FIC de données de transactions TRI à TRM, la dernière transaction passée étant référencée TRM et la transaction TRI étant la plus ancienne parmi lesquelles un acquittement du serveur SER n'a pas encore été reçu par la borne. Ainsi, l'unité de traitement UT' est préférentiellement programmée pour stocker durablement les données de transactions jusqu'à réception de données d'acquittement correspondantes. A cet effet, l'unité UT' comporte en outre un processeur PROC capable d'exécuter les instructions d'un programme informatique pour gérer la mémoire de travail MEM, ainsi que la communication avec les terminaux via le module de communication COM. Dans le mode de réalisation de la figure 5, l'unité de traitement UT' (via le module COM) détecte les terminaux TER1, TER2, ..., TERN qui sont dans sa portée POR d'une part, et qui sont susceptibles d'autre part de communiquer avec la borne. Il s'agit typiquement des terminaux sur lesquels une application de dialogue avec les bornes a été installée pour la consommation de jetons par exemple, ainsi qu'une routine particulière dans cette application pour la transmission des données de transactions au serveur distant SER, et, en retour, des données d'acquittements vers la borne.

Ainsi par exemple, les terminaux répondant au message M1 issu de l'équipement sont susceptibles de transmettre les données de transactions au serveur. L'équipement peut alors transmettre à ces terminaux TER1 à TERN ces données de transactions FIC** en les chiffrant avec la deuxième clé. Il convient de noter en outre que ces terminaux TER1 à TERN ne sont pas nécessairement des terminaux ayant effectué une transaction avec la borne, ou tout au moins l'une des transactions TRI à TRM avec la borne. On cherche donc ici à multiplier la probabilité pour que le fichier FIC** parvienne bien au serveur SER. On peut à cet effet comptabiliser le nombre de terminaux TERN ayant reçu le fichier FIC**, et commencer à effacer les données d'une transaction TRI de la mémoire MEM lorsqu'elles ont été transmises un nombre de fois prédéterminé (dix fois par exemple).

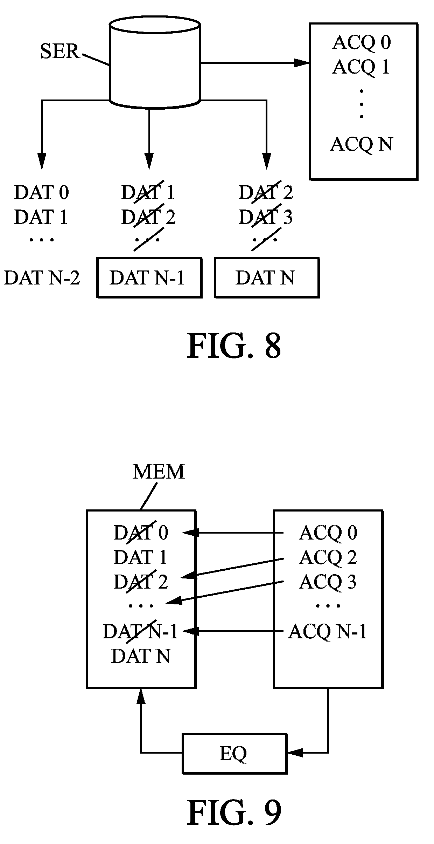

Dans une variante, l'unité de traitement efface de la mémoire MEM les données de transactions pour lesquelles l'équipement a reçu via les terminaux un acquittement du serveur. Ainsi, en référence à la figure 6, après validation d'une transaction TRj à l'étape S1, les données de cette transaction DATj sont stockées en mémoire MEM de l'unité de traitement UT' à l'étape S2. Parallèlement, l'équipement détermine à l'étape S3 si un terminal susceptible de transmettre ces données est dans la portée du module COM. Si tel est le cas, à l'étape S4, l'équipement transmet les données DATj à ce terminal (éventuellement avec d'autres données de transactions précédentes, cryptées avec la deuxième clé précitée). Par ailleurs, à l'étape S5, l'équipement reçoit du terminal des données d'acquittements qu'il a pu recevoir du serveur dans le cas où le terminal a déjà eu un échange avec le serveur SER. A l'étape S6, l'équipement est alors en mesure de déterminer si des données d'acquittement ACQi ont été reçues pour une transaction TRi dont les données DATi sont encore en mémoire MEM. Si tel est le cas, l'équipement, à l'étape S7, peut effacer de sa mémoire MEM ces données DATi d'une transaction pour laquelle l'acquittement a bien été reçu. Cette procédure est illustrée schématiquement sur la figure 9, sur laquelle l'équipement EQ efface de sa mémoire MEM les données de transaction DATi pour lesquelles un acquittement ACQi a été reçu.

On peut se référer maintenant à la figure 7 résumant les échanges entre les différentes entités du système comprenant l'équipement EQ, un terminal TER apte à communiquer avec l'équipement et le serveur distant SER. Ici encore, une application de dialogue avec un parc de bornes a été installée dans le terminal TER et ce dernier est apte en particulier à dialoguer avec l'équipement EQ. Ainsi, le terminal TER répond favorablement le message M1-OK au message M1 qu'émet l'équipement. Par exemple, l'équipement peut émettre ce message M1 sur détection de chaque terminal dans sa portée POR. Ensuite, indépendamment de la réponse de l'utilisateur via l'interface homme-machine IHM (M2-OK/KO) pour savoir s'il souhaite le service ou non, l'équipement transmet les données de transactions DATj** qu'il a en mémoire (chiffrées à l'aide de la deuxième clé). Ultérieurement, le terminal TER lorsqu'il a accès au réseau cellulaire, peut transmettre ces données au serveur distant SER, et recevoir du serveur des données d'acquittements ACQi** (chiffrées aussi à l'aide de la deuxième clé). Le terminal TER peut effacer de sa mémoire les données de transactions et stocker les données d'acquittements qu'il reçoit du serveur. Lors d'une prochaine interaction avec l'équipement EQ, ce dernier peut recevoir du terminal TER les données d'acquittements ACQi**. En outre, il peut recevoir de l'équipement de nouvelles données de transactions DATk** à transmettre au serveur. On relèvera que le terminal TER, au moment où il reçoit les données DATj** de l'équipement (flèche DATj**) peut aussi transmettre à l'équipement des données d'acquittements éventuelles qu'il a pu recevoir préalablement du serveur SER.

En référence à la figure 8, le serveur SER, de son côté, reçoit de plusieurs terminaux des jeux de données de transactions DAT0 à DATN-2 ; DAT1 à DATN-1 ; DAT2 à DATN ; etc. Par comparaison et recoupement de ces données, le serveur SER est en mesure d'effacer les mêmes données reçues plusieurs fois et supprime ainsi les redondances, pour construire un fichier de données d'acquittements ACQ0, ACQ1, ..., ACQN qu'il transmet aux terminaux TER.

L'application installée dans un terminal TER pour le dialogue avec une borne permet donc, en outre, d'échanger des données de transactions/acquittements avec un serveur SER de pointage des données de transactions, et ce, sans même que l'utilisateur du terminal ne s'aperçoive de ces communications. En référence à la figure 10, dans un exemple de réalisation, sur réception d'un jeu de données de transactions issues d'un équipement, le terminal TER peut déterminer si l'identifiant de communication via Bluetooth de cet équipement correspond à un identifiant d'équipement connu pour fournir un service en lien avec l'application installée. Par exemple, les équipements EQ des différentes bornes fournissant un service donné, peuvent avoir des identifiants de communication via la liaison de courte portée F' 1 commençant par le même en-tête (ou « header »). Ainsi, si l'équipement EQ a un identifiant dont l'en-tête est bien identifié par l'application installée dans le terminal à l'étape S10 de la figure 10, le terminal TER stocke les données de transactions qu'il reçoit de l'équipement EQ, en vue d'une transmission ultérieure à un serveur SER dont l'adresse @SER est fournie par l'application à l'étape S11. Sinon, il les ignore. Ensuite, à l'étape S12, lorsque le terminal a accès au réseau cellulaire, il transmet les données de transactions au serveur SER (à l'adresse @SER). A l'étape S13, le terminal TER reçoit en retour du serveur SER, et stocke en mémoire, des données d'acquittements IDB, destinées par exemple à un parc de bornes dont les équipements ont le même header, ou alternativement à un ensemble de bornes avec lesquelles le terminal TER a déjà eu une interaction (pour ne pas surcharger inutilement la mémoire du terminal avec des données destinées à des bornes qu'il n'a statistiquement pas de chance de rencontrer). A l'étape ultérieure S14, si le terminal TER est à proximité d'un équipement dont le header au moins est reconnu par le terminal, ce dernier transmet à l'étape S15 les données d'acquittements qui sont destinées à cet équipement EQ.

A cet effet, l'application dans le terminal peut vérifier l'identifiant de communication courte portée de l'équipement et lui transmettre les données d'acquittements qui lui sont destinées (qui sont répertoriées dans la mémoire du terminal en correspondance d'un identifiant correspondant à celui de l'équipement). On précise ici que le message M1 des figures 4 et 7 comporte classiquement l'identifiant de l'équipement EQ. Ainsi, lors de ce premier message M1, l'équipement EQ fournit au terminal TER son identifiant.

Dans une variante plus simple, le terminal transmet toutes les données IDB qu'il a reçues du serveur (une fois qu'il a répondu le message M1-OK à l'équipement EQ dont le header a été reconnu) et l'équipement ignore les données d'acquittement qui ne lui sont pas destinées. Dans une variante encore plus simple, le terminal transmet les données IDB à chaque interaction courte portée avec un équipement quelconque et ce dernier ignore les données qu'il ne peut pas déchiffrer avec sa clé (deuxième clé de chiffrement précitée), et parmi celles que l'équipement peut déchiffrer, les données qui ne lui sont pas destinées.

D'ailleurs, l'invention n'est pas limitée de façon générale aux formes de réalisation décrites ci-avant à titre d'exemples ; elle s'étend à d'autres variantes.

Ainsi par exemple, on peut prévoir une seule transmission de données de transaction au terminal avec lequel cette transaction vient d'être passée (comme illustré sur la figure 4), sans que l'équipement n'attende ensuite de données d'acquittement correspondant à cette transaction. L'équipement peut effacer directement ces données de transaction, une fois qu'elles ont été communiquées au terminal. Cette réalisation repose sur le fait qu'il est statistiquement quasi-certain que le terminal aura ultérieurement accès au réseau cellulaire. Elle présente l'avantage de simplifier le procédé : en se passant des transmissions des données d'acquittements, mais aussi en n'ayant besoin que d'une unique clé de chiffrement entre la borne, le terminal et l'équipement.

Néanmoins, le mode de réalisation, présenté ci-avant en référence à la figure 5 notamment, reste particulièrement avantageux dans les cas où certains terminaux fréquentent régulièrement les mêmes lieux et ont des interactions avec les mêmes bornes sur ces lieux (cantine sur un lieu de travail, services de parking au moins ou à l'année, etc.).

## Revendications

1. Procédé mis en oeuvre par des moyens informatiques, de gestion d'une transaction entre :
- un équipement (EQ), de contrôle de fourniture d'un service, et
- un terminal (TER) de télécommunication mobile via un réseau étendu, à disposition d'un utilisateur sollicitant le service,
dans lequel l'équipement de contrôle :
a) stocke en mémoire des données d'au moins une transaction passée avec un terminal, en vue d'une transmission à un serveur distant (SER), de pointage de transactions opérées au moins par ledit équipement,
le procédé étant **caractérisé en ce que**, l'équipement étant dépourvu de moyens de télécommunication via un réseau étendu, la communication entre l'équipement et un terminal s'établit via une liaison de type radiofréquence de courte portée (F'1),
et **en ce que** l'équipement :
b) transmet lesdites données de transaction (FIC**) à au moins un terminal (TER1, ..., TERN) passant à proximité de l'équipement et dans la portée de ladite liaison radiofréquence, en vue d'une communication ultérieure par ledit terminal passant, des données de transaction au serveur distant et via le réseau étendu.

2. Procédé selon la revendication 1, **caractérisé en ce que** l'équipement exécute l'étape b) au moins à chaque passage d'un terminal (TER1, ..., TERN) à proximité de l'équipement.

3. Procédé selon la revendication 2, **caractérisé en ce que** l'équipement :
- à l'étape a), stocke en mémoire (MEM), après une transaction courante, un jeu de données (FIC) comprenant des données de la transaction courante, ainsi que des données d'au moins une transaction passée, antérieure à la transaction courante, et
- à l'étape b), transmet ledit jeu de données (FIC**) à chaque passage d'un terminal à proximité de l'équipement.

4. Procédé selon la revendication 3, **caractérisé en ce que** le serveur distant, sur réception d'une pluralité de jeux de données de transaction (DAT0, ..., DATN), issus respectivement de terminaux passant successivement à proximité de l'équipement, retrouve les données de transaction avec chaque terminal, et élimine les données de transaction reçues en redondance (DAT1, DAT2, DAT3, ...).

5. Procédé selon l'une des revendications 2 à 4, **caractérisé en ce que** l'équipement compte un nombre de transmissions de données à l'étape b) à des terminaux passants successifs (TER1,...TERN), et efface de sa mémoire les données stockées à l'étape a) si ledit nombre de transmissions dépasse un seuil prédéterminé.

6. Procédé selon l'une des revendications précédentes, **caractérisé en ce que**, à l'issue de l'étape b), le serveur distant :
- sur réception desdites données de transaction, acquitte les données de transaction reçues, et
- en retour, transfère des données d'acquittement (ACQ0, ..., ACQN) de transaction au terminal passant, le terminal passant stockant les données d'acquittement en vue d'une communication ultérieure desdites données d'acquittement par le terminal passant à l'équipement via ladite liaison radiofréquence de courte portée.

7. Procédé selon la revendication 6, **caractérisé en ce que**, sur réception desdites données d'acquittement de transactions, l'équipement efface de sa mémoire les données de transactions correspondantes, stockées à l'étape a).

8. Procédé selon l'une des revendications précédentes, l'étape a) étant précédée d'un échange de messages entre l'équipement et un terminal pour que l'équipement vérifie une habilitation d'un utilisateur de ce terminal à obtenir le service,
**caractérisé en ce que** ledit échange de messages (M2*, M2*-OK) préalable à l'étape a) est chiffré avec une première clé de chiffrement, tandis que l'équipement chiffre les données de transaction (M2**-DAT) envoyées au terminal passant à l'étape b) avec une deuxième clé de chiffrement, la deuxième clé étant distincte de la première clé.

9. Procédé selon l'une des revendications précédentes, **caractérisé en ce que**, à l'issue d'une transaction avec un terminal courant, l'équipement de contrôle :
a) stocke en mémoire les données de transaction avec le terminal courant,
b) transmet les données de transaction au terminal courant en vue d'une communication ultérieure par ledit terminal courant des données de transaction au serveur distant et via le réseau étendu, et
c) commande à un automate (AUT) de fournir le service sollicité.

10. Programme informatique **caractérisé en ce qu'**il comporte des instructions pour la mise en oeuvre du procédé selon l'une des revendications précédentes, lorsque ce programme est exécuté par un processeur.

11. Equipement (EQ) de contrôle de fourniture d'un service, comportant au moins une interface de communication radiofréquence de courte portée (COM) reliée à un circuit de traitement (UT') programmé pour la mise en oeuvre du procédé selon l'une des revendications 1 à 9.

12. Serveur (SER) de pointage de transactions opérées par un équipement selon la revendication 11, **caractérisé en ce qu'**il comporte un module informatique exécutant au moins une routine de recoupement de données pour la mise en oeuvre du procédé selon la revendication 4.

13. Terminal (TER) de télécommunication mobile via un réseau étendu, comportant en outre une interface de communication radiofréquence de courte portée (BT) reliée à un circuit de traitement (CT) programmé pour transmettre, via le réseau étendu (RES) et à un serveur distant prédéterminé (SER), des données de transaction reçues via une liaison radiofréquence de courte portée (F'1) d'un équipement de contrôle de fourniture d'un service à l'issue de l'étape b) du procédé selon l'une des revendications 1 à 9.
